# EUROPEAN PATENT APPLICATION

(11) **EP 4 234 603 A1**
(43) Date of publication of application: **30.08.2023**
(21) Application number: 21882848.1
(22) Date of filing: 20.10.2021
(51) Int. Cl.: C08G 59/20, C08G 59/38, C08J 5/24, B29C 70/18, B29C 70/42

(54) **METHOD FOR PRODUCING ELECTRODEPOSITION-COATED ARTICLE, PREPREG, AND EPOXY RESIN COMPOSITION**

(30) Priority: 22.10.2020 JP 2020177598; 08.06.2021 JP 2021096121
(71) Applicant: Mitsubishi Chemical Corporation, Chiyoda-ku Tokyo 100-8251 (JP)
(72) Inventor: MIYAHARA, Yuki, Tokyo 100-8251 (JP); OTA, Akira, Tokyo 100-8251 (JP)
(74) Representative: Hoffmann Eitle
(86) International application number: PCT/JP2021/038701
(87) International publication number: WO 2022/085707

(57) **Abstract**

The present invention provides an electrodeposition-coated article production method which is suitable for producing an electrodeposition-coated article comprising a carbon fiber-reinforced plastic. An electrodeposition-coated article production method according to the present invention includes: a molding step of obtaining a carbon fiber-reinforced plastic molded article by curing a prepreg comprising a carbon fiber reinforcement and a thickened product of an epoxy resin composition in which a bisphenol A epoxy resin, [4-(glycidyloxy)phenyl]diglycidylamine and a curing agent component are mixed; and an electrodeposition coating step of coating the carbon fiber-reinforced plastic molded article by electrodeposition. The epoxy resin composition, when cured at 140°C, gives a cured resin which has a glass transition temperature G'-Tg of more than 100°C and less than 200°C and in which a dynamic storage elastic modulus G' value at 200°C is more than or equal to 8% of the value at 100°C.

## Description

### Technical Field

The present invention relates to: a method for producing an electrodeposition-coated article; a prepreg; and an epoxy resin composition.

### Background Art

Carbon fiber-reinforced plastic (CFRP) is a lightweight material excellent in mechanical properties. This material is suitable for parts of automobiles, motorcycles, bicycles, ships, railway vehicles, manned aircrafts, unmanned aircrafts, and other equipment for transportation. Therefore, carbon fiber-reinforced plastic is of increasing importance in recent years.

One of methods for producing a structure made of carbon fiber-reinforced plastic uses a prepreg such as a sheet molding compound (SMC) (Patent Literature 1). The prepreg is a molding intermediate material that is obtained by impregnating, in advance, a carbon fiber reinforcement with a resin.

Well-known is an electrodeposition-coated article that is made by electrodeposition coating a carbon fiber-reinforced plastic obtained by curing an SMC (Patent Literature 2 and Patent Literature 3).

### Citation List

### [Patent Literature]

[Patent Literature 1]
   International Publication No. WO 2018/190329
[Patent Literature 2]
   Japanese Patent Application Publication Tokukai No. 2009-13306
[Patent Literature 3]
   International Publication No. WO 2016/104416

### Summary of Invention

### Technical Problem

In electrodeposition coating, the temperature of a workpiece becomes the highest in a drying step, and the highest temperature of the workpiece in the drying step reaches approximately 200°C.

Therefore, it is considered that, if a carbon fiber-reinforced plastic having a reduced decrease in rigidity when heated to 200°C is provided, it can be suitably used as a material of an electrodeposition-coated article.

The present invention has been attained through studies that are carried out, on the basis of the above idea, by the inventors of the present invention. Main objects of the present invention are (i) to provide a method for producing an electrodeposition-coated article, the method being suitable for producing an electrodeposition-coated article comprising a carbon fiber-reinforced plastic, (ii) to provide a prepreg that gives a carbon fiber-reinforced plastic that can be preferably used in production of the electrodeposition-coated article, and (iii) to provide an epoxy resin composition that is preferably used in production of such a prepreg.

### Solution to Problem

According to an aspect of the present invention, provided is a method for producing an electrodeposition-coated article, the method including: a molding step of obtaining a carbon fiber-reinforced plastic molded article by curing a prepreg comprising a carbon fiber reinforcement and an epoxy resin composition in which a bisphenol type epoxy resin, [4-(glycidyloxy)phenyl]diglycidylamine and a curing agent component are mixed; and an electrodeposition coating step of coating the carbon fiber-reinforced plastic molded article by electrodeposition.

According to another aspect of the present invention, provided is a prepreg comprising: an epoxy resin composition in which a bisphenol type epoxy resin, [4-(glycidyloxy)phenyl]diglycidylamine, and a curing agent component are mixed; and a carbon fiber reinforcement, the epoxy resin composition, when cured at 140°C, giving a cured resin which has a glass transition temperature G'-Tg of more than 100°C and less than 200°C and in which a dynamic storage elastic modulus G' value at 200°C is preferably more than or equal to 8%, more preferably more than or equal to 10%, and still more preferably more than or equal to 12% of the value at 100°C.

According to still another aspect of the present invention, provided is a prepreg comprising: an epoxy resin composition in which a bisphenol type epoxy resin, [4-(glycidyloxy)phenyl]diglycidylamine, 4,4'-methylenebis(N,N-diglycidylaniline) and a curing agent component are mixed; and a carbon fiber reinforcement.

According to still another aspect of the present invention, provided is an epoxy resin composition in which a bisphenol type epoxy resin, [4-(glycidyloxy)phenyl]diglycidylamine, and a curing agent component are mixed, the epoxy resin composition, when cured at 140°C, giving a cured resin which has a glass transition temperature G'-Tg of more than 100°C and less than 200°C and in which a dynamic storage elastic modulus G' value at 200°C is preferably more than or equal to 8%, more preferably more than or equal to 10%, and still more preferably more than or equal to 12% of the value at 100°C.

According to still another aspect of the present invention, provided is an epoxy resin composition in which a bisphenol type epoxy resin, [4-(glycidyloxy)phenyl]diglycidylamine, 4,4'-methylenebis(N,N-diglycidylaniline) and a curing agent component are mixed.

### Advantageous Effects of Invention

According to an embodiment of the present invention, provided is a method for producing an electrodeposition-coated article, the method being suitable for producing an electrodeposition-coated article comprising a carbon fiber-reinforced plastic.

According to another embodiment of the present invention, provided is a prepreg that gives a carbon fiber-reinforced plastic which can be preferably used in production of the electrodeposition-coated article.

According to still another embodiment of the present invention, provided is an epoxy resin composition that can be preferably used in production of such a prepreg.

### Brief Description of Drawings

Fig. 1 is a flow chart showing an electrodeposition-coated article production method according to an embodiment.
Fig. 2 is a graph showing temperature dependencies of dynamic storage elastic moduli G' of cured resins prepared from three kinds of epoxy resin compositions, respectively.
Fig. 3 is a schematic view illustrating a device for producing a sheet molding compound.

### Description of Embodiments

### 1. Method for producing electrodeposition-coated article

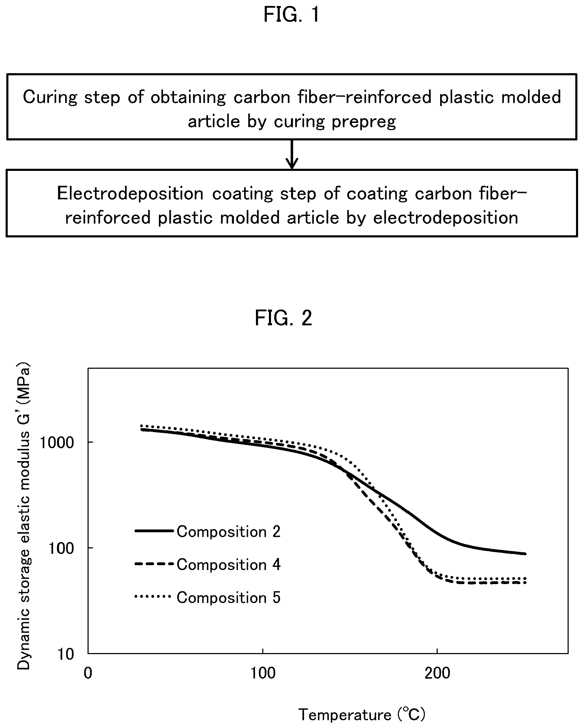

An embodiment of the present invention relates to a method for producing an electrodeposition-coated article, the method including: a curing step of obtaining a carbon fiber-reinforced plastic molded article by curing a prepreg; and an electrodeposition coating step of coating the carbon fiber-reinforced plastic molded article by electrodeposition. Fig. 1 shows a flow of this method.

For example, in a case where an electrodeposition-coated article for automobile parts is produced, emphasis is placed particularly on production efficiency. Accordingly, in the curing step, the prepreg is cured at a curing temperature of preferably less than or equal to 180°C, more preferably less than or equal to 160°C, and still more preferably less than or equal to 150°C.

In the case of compression molding, the curing temperature is a temperature of a mold.

In the electrodeposition coating step, the carbon fiber-reinforced plastic molded article obtained in the curing step is electrodeposition-coated with use of a typical electrodeposition coating technique. A technique disclosed in above-described Patent Literature 3 is also included in an electrodeposition coating technique that can be employed in the electrodeposition coating step.

The electrodeposition coating step includes, as substeps, an electrodeposition step, a water washing step, and a drying step. In the drying step, a coated object is exposed to a high temperature of up to approximately 200°C. In light of this, in the electrodeposition-coated article production method according to an embodiment, an attempt is made to improve rigidity at 200°C of the carbon fiber-reinforced plastic molded article that is the coated object. More specifically, an attempt is made to improve the prepreg that is a material of the carbon fiber-reinforced plastic molded article so that the rigidity at 200°C of the carbon fiber-reinforced plastic molded article can be improved.

### 2. Prepreg

The prepreg used in the electrodeposition-coated article production method according to an embodiment is produced by carrying out, in order, (i) the following first step and the following second step or (ii) the following first step to the following third step.

(First step) An epoxy resin composition is prepared by mixing a plurality of components including an epoxy resin component and a curing agent component.

(Second step) A composite is formed by impregnating a fiber reinforcement with the epoxy resin composition that is prepared in the first step.

(Third step) The epoxy resin composition in the composite that is formed in the second step is thickened.

A viscosity at 25°C of the epoxy resin composition prepared in the first step, which is measured after the composition is placed in a sealed container and left to stand at 25°C for 30 minutes from the preparation, (hereinafter, this viscosity is also referred to as "initial viscosity") is preferably less than or equal to 30 Pa·s, more preferably less than or equal to 15 Pa·s, even more preferably less than or equal to 10 Pa·s, and can be less than or equal to 5 Pa·s.

When the initial viscosity of the epoxy resin composition prepared in the first step is lower, the second step can be more efficiently carried out, without heating the epoxy resin composition, in a room at a temperature of more than or equal to 17°C and less than or equal to 28°C that is suitable for work operation.

The initial viscosity of the epoxy resin composition is measured with use of a rheometer such as HAAKE (registered trademark) MARS (registered trademark) 40 manufactured by ThermoFisher Scientific K.K., under the following conditions: an oscillatory mode, an angular velocity of 10 rad/s, a plate diameter of 25 mm, and a gap (distance between plates) of 0.5 mm.

In the epoxy resin composition prepared in the first step, at least a bisphenol type epoxy resin and [4-(glycidyloxy)phenyl]diglycidylamine are mixed as an epoxy resin component. The epoxy resin component is a component comprising a compound having an epoxy group, and can be a prepolymer or a monomer.

Preferable types of the bisphenol type epoxy resin composition are a bisphenol A epoxy resin and a bisphenol F epoxy resin, and the bisphenol type epoxy resin is particularly preferably a bisphenol A epoxy resin. The bisphenol A epoxy resin and the bisphenol F epoxy resin can be each used alone or with another bisphenol type epoxy resin. The bisphenol A epoxy resin can be used in combination with the bisphenol F epoxy resin.

The bisphenol A epoxy resin contains, as an essential component, a compound represented by formula (a) below, where n = 0, that is, bisphenol A diglycidyl ether (BADGE). The bisphenol A epoxy resin is usually a prepolymer which further contains a compound represented by the following formula (a), where n is more than or equal to 1. 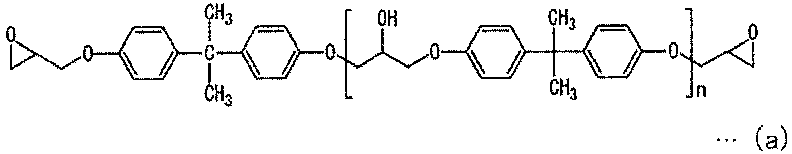 In the case of a commercial bisphenol A epoxy resin product that is liquid at room temperature, an average of n in the formula (a) is approximately 0.1 to 0.2.

[4-(glycidyloxy)phenyl]diglycidylamine is an epoxy compound that is represented by the following formula (b).

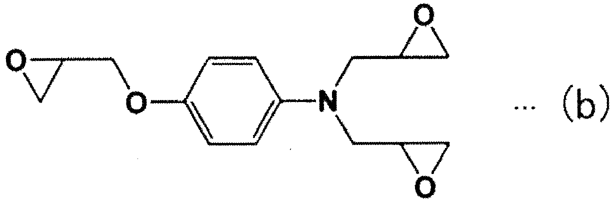

For example, it is possible to easily prepare an epoxy resin composition having an initial viscosity in the foregoing preferable range, when jER630 (jER is a registered trademark) which is manufactured by Mitsubishi Chemical Corporation and which is a [4-(glycidyloxy)phenyl]diglycidylamine product having a viscosity of 0.5 Pa·s to 1 Pa·s at 25°C is used together with a commercial bisphenol type epoxy resin whose components are adjusted so that the commercial bisphenol type epoxy resin is liquid at 25°C.

As is well known to a person skilled in the art, there are a number of commercial bisphenol type epoxy resins having a viscosity at 25°C of less than or equal to 5 Pa·s.

In the epoxy resin composition prepared in the first step, the bisphenol type epoxy resin and [4-(glycidyloxy)phenyl]diglycidylamine are each mixed in an amount that is adjusted so that when epoxy resin composition is cured, a resultant cured resin has a glass transition temperature G'-Tg of more than 100°C and less than 200°C and in the resultant cured resin, a dynamic storage elastic modulus G' value at 200°C is preferably more than or equal to 8%, more preferably more than or equal to 10%, and still more preferably more than or equal to 12% of the value at 100°C.

The dynamic storage elastic modulus G' is a storage shear elastic modulus which is measured with use of a dynamic viscoelasticity measurement device, such as ARES-G2 manufactured by TA Instruments, under the following conditions: a torsional mode; a temperature increase rate of 5°C/minute; a frequency of 1 Hz; a strain of 0.1%; and a temperature of 25°C to 250°C. The glass transition temperature G'-Tg is a temperature at an intersection of (i) an approximate straight line of a flat region of a graph obtained by plotting log G' against the temperature and (ii) an approximate straight line of a region where log G' of the graph decreases sharply.

In measurement of the dynamic storage elastic modulus G', it is possible to use a test piece having a length of 50 mm and a width of 12.5 mm that is cut out from a resin plate having a thickness of 2 mm. In order to prepare the resin plate, an epoxy resin composition immediately after preparation is first vacuum defoamed and then injected into a 2-mm-thick gap formed between two 4-mm-thick glass plates with use of a spacer. Next, the epoxy resin composition that is sandwiched between the two glass plates is placed in a hot air circulating thermostatic oven that is preheated to 70°C. Then, the temperature in the oven is increased such that the surface temperature of the glass plates is increased from 70°C to 140°C at a rate of 10°C/minute. Subsequently, the epoxy resin composition is cured by heating inside the oven so that the surface temperature of the glass plates is maintained at 140°C for another 30 minutes. Finally, the glass plates are removed, so that the resin plate having a thickness of 2 mm is obtained.

One of purposes of mixing the bisphenol type epoxy resin, particularly the bisphenol A epoxy resin, in the epoxy resin composition prepared in the first step is to reduce cure shrinkage.

When a matrix resin has a larger cure shrinkage, a problem such as cracking and/or warping is more likely to occur when the prepreg is cured.

Therefore, a total amount of the bisphenol type epoxy resin that is mixed in the epoxy resin composition prepared in the first step is preferably more than or equal to 50% by weight with respect to all epoxy resin components mixed in the epoxy resin composition.

In a preferable example, an amount of the bisphenol A epoxy resin can be more than or equal to 50% by weight of all the epoxy resin components mixed in the epoxy resin composition.

The bisphenol type epoxy resin is cheaper than other epoxy resins, and therefore, increasing the amount of the bisphenol type epoxy resin mixed contributes to reduce cost of the prepreg.

The purpose of mixing [4-(glycidyloxy)phenyl]diglycidylamine in the epoxy resin composition prepared in the first step is to improve a rigidity of a cured resin obtained from the epoxy resin composition at the time when the cured resin is heated to a temperature close to 200°C.

The inventors of the present invention have found that in a cured product of the epoxy resin composition in which a bisphenol type epoxy resin and [4-(glycidyloxy)phenyl]diglycidylamine are mixed, a ratio of the value of the dynamic storage elastic modulus G' at 200°C to the value at 100°C tends to increase in accordance with the amount of [4-(glycidyloxy)phenyl]diglycidylamine mixed. No such tendency has been observed in the cases of at least other three kinds of glycidylamines, specifically, 4,4'-methylenebis(N,N-diglycidylaniline), [3-(glycidyloxy)phenyl]diglycidylamine, and N,N,N',N'-tetraglycidyl-m-xylenediamine.

In view of increasing the degree of improvement in rigidity at 200°C of the cured resin which has been obtained from the epoxy resin composition, the total amount of the bisphenol type epoxy resin mixed is preferably less than or equal to 80% by weight, and more preferably less than or equal to 75% with respect to all the epoxy resin components mixed in the epoxy resin composition. From the same viewpoint, the amount of [4-(glycidyloxy)phenyl]diglycidylamine mixed is preferably more than or equal to 20% by weight, more preferably more than or equal to 25% by weight, and still more preferably more than or equal to 30% by weight, and can be more than or equal to 35% by weight or more than or equal to 40% by weight, with respect to all the epoxy resin components mixed in the epoxy resin composition.

In the epoxy resin composition, it is possible to mix an epoxy resin component other than the bisphenol type epoxy resin and the [4-(glycidyloxy)phenyl]diglycidylamine, provided that the effect of the invention is yielded.

One suitable example of such an epoxy resin component is 4,4'-methylenebis(N,N-diglycidylaniline). Partial replacement of the bisphenol type epoxy resin by 4,4'-methylenebis(N,N-diglycidylaniline) can increase a degree of improvement in rigidity at 200°C of the cured resin which is obtained from the epoxy resin composition.

Other examples of the epoxy resin component which can be mixed in the epoxy resin composition and which is other than the bisphenol type epoxy resin and the [4-(glycidyloxy)phenyl]diglycidylamine include, but are not limited to, a naphthalene type epoxy resin, a biphenyl type epoxy resin, a novolac type epoxy resin, an epoxy resin having an oxazolidone ring structure, an alicyclic epoxy resin, and an aliphatic epoxy resin.

A preferable curing agent component that can be mixed in the epoxy resin composition prepared in the first step is a latent curing agent. The latent curing agent is a curing agent which, triggered by heat, causes an epoxy resin to start curing. The latent curing agent is a solid which, at normal temperature, has low solubility in an epoxy resin and sufficiently functions as a curing agent only when heated to melt or to dissolve in the epoxy resin.

Use of the latent curing agent is advantageous both in terms of suppressing an increase in initial viscosity of the epoxy resin composition and in terms of increasing storage stability of the completed prepreg.

Typical examples of the latent curing agent include various types of imidazoles, dicyandiamide, and a boron trifluoride-amine complex.

The imidazoles are each a compound having an imidazole ring. The imidazoles include imidazolium salts, imidazole complexes, and the like, in addition to substituted imidazoles in each of which hydrogen atoms of an imidazole is replaced by a substituent.

Suitable examples of the substituted imidazoles that serve as the latent curing agent include, but are not limited to, substituted imidazols each having, in a molecule thereof, an aromatic ring that may be a heteroaromatic ring, such as 2,4-diamino-6-[2'-methylimidazolyl-(1')]-ethyl-s-triazine, 2-phenyl-4-methylimidazole, 2-phenyl-4-methyl-5-hydroxymethylimidazole, 2-phenyl-4-benzyl-5-hydroxymethylimidazole, 2-phenyl-4,5-dihydroxymethylimidazole, 2-p-tolyl-4-methyl-5-hydroxymethylimidazole, 2-p-tolyl-4,5-dihydroxymethylimidazole, 2-m-tolyl-4-methyl-5-hydroxymethylimidazole, 2-m-tolyl-4,5-dihydroxymethylimidazole, and 1-cyanoethyl-2-phenylimidazole.

Imidazolium salts such as 1-cyanoethyl-2-ethyl-4-methylimidazolium trimellitate, 1-cyanoethyl-2-undecylimidazoliumtrimellitate, and 1-cyanoethyl-2-phenylimidazoliumtrimellitate are also suitable examples of an imidazole latent curing agent.

Particularly preferable examples of the imidazole latent curing agent include: isocyanuric acid adducts of various substituted imidazoles, such as 2-phenylimidazole, 2-methylimidazol, 2-phenyl-4,5-dihydroxymethylimidazole, and 2-phenyl-4-methyl-5-hydroxymethylimidazole; and in particular, isocyanuric acid adducts of substituted imidazoles each having a triazine ring, such as 2,4-diamino-6-(2'-methylimidazolyl-(1'))-ethyl-s-triazine, 1-(4,6-diamino-s-triazine-2-yl)ethyl-2-undecylimidazole and 2,4-diamino-6-[2-(2-ethyl-4-methyl-1-imidazolyl)ethyl]-s-triazine.

Another suitable example of the latent curing agent is an amine adduct. The amine adduct is a product of a reaction in which a substituted imidazole and/or a tertiary amine is reacted with an epoxy resin and/or an isocyanate so as to have a higher molecular weight. The amine adduct is relatively less soluble in the epoxy resin.

One type of those latent curing agents including the imidazoles can be used alone, or two or more types of such latent curing agents can be used in combination.

When dicyandiamide is used as the latent curing agent, a urea derivative, such as 4,4'-methylenebis(phenyldimethyl urea) and/or 2,4-bis(3,3-dimethylureido)toluene, can preferably be used as a curing accelerator in combination with the dicyandiamide.

The curing agent component that can be mixed in the epoxy resin composition prepared in the first step is not limited to the latent curing agent.

In the epoxy resin composition prepared in the first step, it is possible to mix, in addition to the latent curing agent or instead of the latent curing agent, a curing agent other than the latent curing agent, for example, a carboxylic acid anhydride, an aromatic amine, and/or a phenol resin.

In order to reduce the initial viscosity, it is possible to mix, in the epoxy resin composition prepared in the first step, any of methyltetrahydrophthalic anhydride, methylhexahydrophthalic anhydride, and methyl-5-norbornene-2,3-dicarboxylic anhydride (methyl-3,6-endomethylene- 1,2,3,6-tetrahydrophthalic anhydride) among carboxylic acid anhydrides since these anhydrides each have a viscosity at 25°C of less than 0.5 Pa·s.

It is known that a carboxylic acid anhydride, when catalyzed by a tertiary amine that can be glycidylamine, reacts with an epoxy compound at a low temperature and forms a bond with the epoxy compound. The carboxylic acid anhydride acts as a thickening agent when mixed in a relatively small amount in the epoxy resin compound, for example, in an amount of less than 20 parts by weight with respect to 100 parts by weight of the epoxy resin component.

Thickening with use of the carboxylic acid anhydride occurs when the carboxylic acid anhydride forms a bond with the epoxy compound. Therefore, the carboxylic acid anhydride in the epoxy resin composition is consumed with the progress of the thickening.

An amine compound also acts as the thickening agent, when mixed in the epoxy resin composition such that the amount of active hydrogen is approximately 0.1 equivalents to 0.5 equivalents per epoxy group. Examples of the amine compound that can preferably be used as the thickening agent include, but are not limited to, isophoron diamine, bis(4-aminocyclohexyl)methane, and 1,3-bis(aminomethyl)cyclohexane.

Thickening with use of the amine compound occurs when the amine compound forms a bond with the epoxy compound. Therefore, the amine compound that is added as the thickening agent in the epoxy resin composition is consumed with the progress of the thickening.

Preferable examples of the thickening agent include a polyisocyanate that can be a diisocyanate such as bis(4-isocyanatophenyl)methane or toluene diisocyanate. When a polyol is used with the polyisocyanate, thickening of the epoxy resin composition is likely to be accelerated. The polyole can be a diol such as ethylene glycol, polyethylene glycol, isosorbide, neopentyl glycol, cyclohexanediol, cyclohexanedimethanol, 1,4-butanediol, 1,5-pentanediol, 3-methyl-1,5-pentanediol, and 1,6-hexanediol.

Thickening with use of polyisocyanate occurs when the polyisocyanate forms a bond with the epoxy compound or with a polyol that is contained together with the polyisocyanate. Therefore, the polyisocyanate in the epoxy resin composition is consumed with the progress of the thickening.

In the epoxy resin composition prepared in the first step, it is possible to mix an optional component in addition to the epoxy resin component and the curing agent component. Examples of the optional component include, but are not limited to, a thickening agent, an internal mold release agent, a low-shrinkage agent, a coloring agent, a flame retardant, an antioxidant, a modifier comprising a rubber, an elastomer or a thermoplastic resin, a conductive filler, and an inorganic filler.

A suitable example of the flame retardant is a non-halogen flame retardant. Examples of the non-halogene flame retardant include, but are not limited to: inorganic phosphorus flame retardants such as red phosphorus; organophosphorous flame retardants such as phosphate ester, organic phosphate, phosphonate, and phosphinate; nitrogen flame retardants such as a triazine compound, a cyanuric acid compound and an isocyanuric acid compound; silicone flame retardants; inorganic flame retardants such as a metal hydroxide and a metal oxide; and organometallic salt flame retardants such as ferrocene and an acetylacetone metal complex. Two or more flame retardants selected from the above flame retardants can be used in combination. For example, it is possible to use an organophosphorous flame retardant and a nitrogen flame retardant in combination.

In terms of productivity, preferably, the epoxy resin composition is not a varnish. In a case where the epoxy resin composition is a varnish, it is necessary to further provide the step of removing a solvent from the epoxy resin composition after the impregnation of the fiber reinforcement in the second step.

In the second step, the fiber reinforcement prepared in advance is impregnated with the epoxy resin composition prepared in the first step, to form a composite comprising the fiber reinforcement and the epoxy resin composition.

The fiber reinforcement preferably contains carbon fiber. Examples of the fiber reinforcement include a carbon fiber mat, a carbon fiber woven fabric, a carbon fiber nonwoven fabric, or a carbon fiber non-crimp fabric.

In a case where the prepreg to be produced is a sheet molding compound, the fiber reinforcement is a carbon fiber mat that is obtained by scattering and depositing, on a carrier film, chopped carbon fiber tows that have a predetermined length in the range of, for example, 5 mm to 10 cm, and preferably 1 cm to 6 cm. In a typical example, the predetermined length can be 0.5 inches (approximately 1.3 cm), 1 inch (approximately 2.5 cm), 1.5 inches (approximately 3.8 cm), or 2 inches (approximately 5.1 cm).

In an example, in the second step, in order to reliably impregnate the carbon fiber reinforcement in a short period of time, a viscosity of the epoxy resin composition prepared in the first step can be reduced by heating before use. Such heating is carried out such that the temperature of the epoxy resin composition does not exceed 80°C, preferably 70°C, more preferably 50°C, and even more preferably 40°C.

In the third step that is to be carried out as necessary, the epoxy resin composition in the composite formed in the second step is thickened. This step is preferably carried out by keeping the composite at a predetermined thickening temperature.

The thickening temperature is typically selected from between room temperature and approximately 80°C. It is possible to set a temperature hold time, by examining how the viscosity of the epoxy resin composition changes when only the epoxy resin composition is put in a sealed container and left to stand at the thickening temperature. The viscosity at 25°C of the epoxy resin composition after the thickening is at least 500 Pa·s, and preferably more than or equal to 1000 Pa·s. Meanwhile, the viscosity at 25°C is typically less than or equal to 100000 Pa·s, preferably less than or equal to 50000 Pa·s, and more preferably less than or equal to 20000 Pa·s, and can be, for example, less than or equal to 10000 Pa·s, less than or equal to 8000 Pa·s, or less than or equal to 6000 Pa·s.

The following will discuss particularly a case in which the prepreg to be produced is a sheet molding compound.

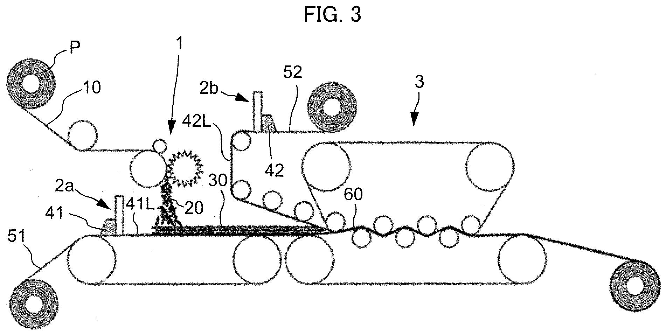

In production of the sheet molding compound, for example, a sheet molding compound production device illustrated in Fig. 3 can be used.

Referring to Fig. 3, a continuous fiber bundle 10, which is a raw material of the fiber reinforcement, is drawn from a fiber package P and fed to a rotary cutter 1.

The continuous fiber bundle 10 is a carbon fiber bundle comprising, for example, 1000 to 100000 carbon fiber filaments per bundle, preferably 3000 to 50000 carbon fiber filaments per bundle, and may be partially split.

The continuous fiber bundle 10 is cut by the rotary cutter 1 into chopped fiber bundles 20.

The fiber length of the chopped fiber bundles 20 can be, for example, within the range of 5 mm to 100 mm, and can be more than or equal to 1 cm and less than 2 cm, more than or equal to 2 cm and less than 3 cm, more than or equal to 3 cm and less than 4 cm, or more than or equal to 4 cm and less than 6 cm.

The chopped fiber bundles 20 fall on a surface of a first carrier film 51 that runs below the rotary cutter 1, and form a fiber mat 30.

Before the fiber mat 30 is deposited, a first resin paste layer 41L comprising a first resin paste 41 is applied to the surface of the first carrier film 51 by a first coater 2a that has a doctor blade. The first resin paste 41 is the epoxy resin composition prepared in the first step.

The first carrier film 51 is a synthetic resin film that is resistant to components of the first resin paste 41.

It is possible to select, as appropriate, a material of the first carrier film 51, from polyolefins such as polyethylene and polypropylene, polyvinylidene chloride, vinyl chloride resin, polyamide, and the like.

The first carrier film 51 may be a multilayer film.

When the viscosity at 25°C of the first resin paste 41 is more than or equal to 0.1 Pa·s and further, more than or equal to 0.5 Pa·s, and is less than or equal to 30 Pa·s and further, less than or equal to 15 Pa·s, the first resin paste layer 41L can be easily formed to have a uniform thickness without heating the first resin paste 41, in a room at a temperature of more than or equal to 17°C and less than or equal to 28°C.

The areal weight of the fiber mat 30, the thickness of the first resin paste layer 41L, and the thickness of a second resin paste layer 42L (described later) are set in consideration of the fiber content and the areal weight of the sheet molding compound to be produced.

The fiber content of the sheet molding compound in which the fiber reinforcement comprises carbon fiber can be, for example, more than or equal to 40 wt% and less than 45 wt%, more than or equal to 45 wt% and less than 55 wt%, more than or equal to 55 wt% and less than 65 wt%, and more than or equal to 65 wt% and less than 80 wt%.

The areal weight of the sheet molding compound can be, for example, more than or equal to 500 g/m² and less than or equal to 1000 g/m², more than or equal to 1000 g/m² and less than or equal to 1500 g/m², more than or equal to 1500 g/m² and less than or equal to 2500 g/m², more than or equal to 2500 g/m² and less than or equal to 3500 g/m², and more than or equal to 3500 g/m² and less than or equal to 5000 g/m².

As compared to a UD prepreg, the sheet molding compound usually has a larger areal weight and a larger thickness that is, for example, 1 mm to 4 mm.

Following formation of the fiber mat 30, the first carrier film 51 and a second carrier film 52 are laminated to sandwich the fiber mat 30 between them, so that a stack 60 is formed.

Before the lamination, the second resin paste layer 42L composed of a second resin paste 42 is applied to one surface of the second carrier film 52 by a second coater 2b including a doctor blade. The second resin paste 42 is the epoxy resin composition prepared in the first step.

The stack 60 is formed such that a surface of the first carrier film 51 to which the first resin paste layer 41L is applied faces a surface of the second carrier film 52 to which the second resin paste layer 42L is applied.

The second carrier film 52 is a synthetic resin film that is resistant to components of the second resin paste 42, and a material and a structure of the second carrier film 52 can be the same as those of the first carrier film 51.

In order to impregnate the fiber mat 30 with the first resin paste 41 and the second resin paste 42, the stack 60 is pressured with an impregnating machine 3.

The stack 60 which has passed through the impregnating machine 3 is wound on a bobbin.

Steps up to this step is carried out with use of the sheet molding compound production device illustrated in Fig. 3.

The stack 60 on the bobbin is maintained at a predetermined temperature for a certain period of time, so that the epoxy resin composition with which the fiber mat 30 is impregnated is thickened. The sheet molding compound is thus completed.

The viscosity at 25°C of the epoxy resin composition thus thickened can be, for example, more than or equal to 1000 Pa·s and less than 2000 Pa, more than or equal to 2000 Pa·s and less than 3000 Pa·s, more than or equal to 3000 Pa·s and less than 4000 Pa·s, more than or equal to 4000 Pa·s and less than 5000 Pa·s, more than or equal to 5000 Pa·s and less than 6000 Pa·s, more than or equal to 6000 Pa·s and less than 8000 Pa·s, more than or equal to 8000 Pa·s and less than 10000 Pa·s, more than or equal to 10000 Pa·s and less than 15000 Pa·s, more than or equal to 15000 Pa·s and less than 20000 Pa·s, more than or equal to 20000 Pa·s and less than 50000 Pa·s, and more than or equal to 50000 Pa·s and less than 100000 Pa·s.

The prepreg produced by the above-described production method can not only be preferably used in the foregoing electrodeposition-coated article production method according to an embodiment. In various carbon fiber-reinforced plastic products including products that are not electrodeposition-coated, by using the prepreg as a material in production, the rigidity at the time of being exposed to a temperature higher than the glass transition temperature G'-Tg can be improved.

### 3. Epoxy resin composition

One embodiment of the present invention relates to an epoxy resin composition.

An embodiment of the present invention includes the epoxy resin composition prepared in the first step in the method for producing the prepreg described in the above section 2.

### 4. Results of experiments

Nine types of epoxy resin compositions were prepared with use of respective materials shown in Table 1 below, and then a cured resin obtained by curing each of the epoxy resin compositions was subjected to dynamic viscoelasticity measurement.

**[Table 1]**

| Code | Product name | Supplier | Compound/ material name |
|---|---|---|---|
| jER827 | jER (registered trademark) 827 | Mitsubishi Chemical | bisphenol A epoxy resin |
| jER828 | jER (registered trademark) 828 | Mitsubishi Chemical | bisphenol A epoxy resin |
| jER630 | jER (registered trademark) 630 | Mitsubishi Chemical | [4-(glycidyloxy)phenyl]diglycidylamine |
| jER604 | jER (registered trademark) 604 | Mitsubishi Chemical | 4,4'- methylenebis(N,N-diglycidylaniline) |
| MY0600 | Araldite (registered trademark) MY0600 | HUNTSMAN | [3-(glycidyloxy)phenyl]diglycidylamine |
| TETRAD-X | TETRAD (registered trademark) -X | Mitsubishi Gas Chemical | N,N,N',N'- tetraglycidyl-m-xylenediamine |
| 2MZA-PW | CUREZOL (registered trademark) 2MZA-PW | Shikoku Chemicals | 2,4-diamino-6-[2'-methylimidazolyl-(1')]-ethyl-s-triazine |
| PN-23J | AJICURE (registered trademark) PN-23J | Ajinomono Fine-Techno | amine adduct type latent curing agent for epoxy resin |
| 2E 4MZ | CUREZOL (registered trademark) 2E4MZ | Shikoku Chemicals | 2-ethyl-4-methylimidazole |
| HN-2200 | HN-2200 | Hitachi Chemical | 3 or 4-methyl-1,2,3,6-tetrahydrophthalic anhydride |

Table 2 shows formulations of the nine types of epoxy resin compositions (compositions 1 to 9) that were prepared.

**[Table 2]**

| | | | Composition 1 | Composition 2 | Composition 3 | Composition 4 | Composition 5 | Composition 6 | Composition 7 | Composition 8 | Composition 9 |
|---|---|---|---|---|---|---|---|---|---|---|---|
| Mixing ratio (parts by weight) | jER827 | | 73 | 55 | 55 | 55 | 55 | 65 | 50 | 60 | 0 |
| | jER828 | | 0 | 0 | 0 | 0 | 0 | 0 | 0 | 0 | 80 |
| | jER630 | | 27 | 45 | 30 | 0 | 0 | 0 | 0 | 20 | 20 |
| | jER604 | | 0 | 0 | 15 | 45 | 0 | 0 | 0 | 20 | 0 |
| | MY0600 | | 0 | 0 | 0 | 0 | 45 | 0 | 0 | 0 | 0 |
| | TETRAD-X | | 0 | 0 | 0 | 0 | 0 | 35 | 50 | 0 | 0 |
| | 2MZA-PW | | 4 | 4 | 4 | 4 | 4 | 4 | 4 | 4 | 5 |
| | PN-23J | | 4 | 4 | 4 | 4 | 4 | 4 | 4 | 4 | 0 |
| | 2E4MZ | | 0 | 0 | 0 | 0 | 0 | 0 | 0 | 0 | 0.03 |
| | HN-2200 | | 11 | 11 | 11 | 11 | 14 | 11 | 10 | 11 | 14 |
| Initial viscosity (Pa·s) | | | 4 | 2 | 4 | 27 | 8 | 8 | 9 | 5 | unmeasured |
| Post-thickening viscosity (Pa·s) | | | 1200 | 600 | 1700 | 6200 | 5700 | 1000 | 300 | 2200 | 11800 |
| G'-Tg (°C) of cured resin | | | 141 | 143 | 143 | 146 | 153 | 134 | 131 | 149 | 142 |
| Dynamic storage elastic modulus of cured resin G' (MPa) | | A (@ 100°C) | 982 | 923 | 964 | 994 | 1074 | 878 | 893 | 1019 | 1068 |
| | | B (@ 200°C) | 92 | 136 | 114 | 54 | 57 | 44 | 43 | 87 | 72 |
| B/A (%) | | | 9 | 15 | 12 | 5 | 5 | 5 | 5 | 9 | 7 |

When the compositions 1 to 9 shown in Table 2 were prepared, latent curing agents 2MZA-PW and PN-23J were each dispersed in jER827 or jER828 to form a masterbatch before being mixed with other components. In each of the compositions 1 to 8, the weight ratio between the latent curing agent and jER827 in the masterbatch was 2:1 (latent curing agent: epoxy resin). In the composition 9, the weight ratio between the latent curing agent and jER828 in the masterbatch was 1:1.

When the compositions 1 to 9 were each prepared, a mixture of components excluding HN-2200 was prepared, and then HN-2200 was added to the mixture.

Table 2 shows together (i) an initial viscosity and a post-thickening viscosity which were obtained by measuring each of the compositions 1 to 9 and (ii) a glass transition temperature G'-Tg and a dynamic storage elastic modulus G' at each of 100°C and 200°C of a cured resin obtained by curing each of the compositions 1 to 9. The glass transition temperature G'-Tg and the dynamic storage elastic modulus G' were obtained in a dynamic viscoelasticity measurement.

The initial viscosity is a viscosity at 25°C that was measured after the epoxy resin composition was placed in a sealed container immediately after the preparation thereof and then left to stand at 25°C for 30 minutes.

The post-thickening viscosity is a viscosity at 25°C that was measured after the epoxy resin composition was placed in a sealed container immediately after the preparation thereof and then left to stand at 25°C for 7 days.

In the dynamic viscoelasticity measurement, a test piece having a length of 50 mm and a width of 12.5 mm which was cut out from a resin plate having a thickness of 2 mm was used. For preparing the resin plate, the epoxy resin composition immediately after the preparation was vacuum defoamed first, and then injected into a 2-mm-thick gap formed between two 4-mm-thick glass plates with use of a spacer. Next, the epoxy resin composition sandwiched between the two glass plates was placed in a hot air circulating thermostatic oven preheated to 70°C. Then, the temperature in the oven was increased such that a surface temperature of the glass plate was increased from 70°C to 140°C at a rate of 10°C/minute. Subsequently, the epoxy resin composition was cured by heating inside of the oven so that the surface temperature of the glass plates was maintained at 140°C for another 30 minutes. The resin plate having a thickness of 2 mm was thus obtained.

The dynamic viscoelasticity measurement was carried out with use of ARES-G2, a product of TA Instruments, under the following conditions: a torsional mode; a temperature increase rate of 5°C/minute; a frequency of 1 Hz; a strain of 0.1%; and a temperature of 25°C to 250°C.

Table 2 shows B/A which is a ratio of a value B at 200°C to a value A at 100°C of the dynamic storage elastic modulus G'. It can be said that a resin with a larger value of this ratio exhibits a smaller decrease in rigidity when heated to a temperature close to 200°C.

A bisphenol A epoxy resin (jER827 or jER828) and a glycidylamine (jER630, jER604, MY0600, TETRAD-X) were mixed as epoxy resin components in each of the compositions 1 to 9. Cured resins obtained from the compositions 2 and 3, in each of which jER630 ([4-(glycidyloxy)phenyl]diglycidylamine) was mixed, had an obviously higher B/A than cured resins obtained from the compositions 4 and 5, in each of which the mixing weight ratio of the glycidylamine to the bisphenol A epoxy resin was the same as that in the compositions 2 and 3 and jER630 was not mixed.

Among the cured resins obtained from the compositions 1 to 3, when the mixing ratio of jER630 was larger, the value of B/A tended to be higher.

Among the cured resins obtained from the compositions 4 to 7, the values of B/A were at similar levels regardless of type and mixing amount of the glycidylamine used.

Fig. 2 is a graph showing temperature dependency of the dynamic storage elastic modulus G' of each of the cured resins prepared from the compositions 2, 4, and 5.

### 5. Summary of embodiments

Embodiments of the present invention include, but are not limited to, the following.
[Embodiment 1] A method for producing an electrodeposition-coated article, the method including: a molding step of obtaining a carbon fiber-reinforced plastic molded article by curing a prepreg comprising a carbon fiber reinforcement and an epoxy resin composition in which a bisphenol type epoxy resin, [4-(glycidyloxy)phenyl]diglycidylamine and a curing agent component are mixed; and an electrodeposition coating step of coating the carbon fiber-reinforced plastic molded article by electrodeposition.
[Embodiment 2] The method according to embodiment 1, wherein in the molding step, the prepreg is cured at a temperature of preferably lower than or equal to 180°C, more preferably lower than or equal to 160°C, and still more preferably lower than or equal to 150°C.
[Embodiment 3] The method according to embodiment 1 or 2, wherein the epoxy resin composition, when cured at 140°C, gives a cured resin which has a glass transition temperature G'-Tg of more than 100°C and less than 200°C and in which a dynamic storage elastic modulus G' value at 200°C is preferably more than or equal to 8%, more preferably more than or equal to 10%, and still more preferably more than or equal to 12% of the value at 100°C.
[Embodiment 4] The method according to any one of embodiments 1 to 3, wherein a total amount of the bisphenol type epoxy resin mixed in the epoxy resin composition is preferably more than or equal to 50% by weight with respect to all epoxy resin components mixed in the epoxy resin composition.
[Embodiment 5] The method according to any one of embodiments 1 to 4, wherein the bisphenol type epoxy resin comprises a bisphenol A epoxy resin.
[Embodiment 6] The method according to embodiment 5, wherein a total amount of the bisphenol A epoxy resin mixed in the epoxy resin composition is preferably more than or equal to 50% by weight with respect to all epoxy resin components mixed in the epoxy resin composition.
[Embodiment 7] The method according to any one of embodiments 1 to 6, wherein a total amount of the bisphenol type epoxy resin mixed in the epoxy resin composition is preferably less than or equal to 80% by weight, and more preferably less than or equal to 75% by weight with respect to all epoxy resin components mixed in the epoxy resin composition.
[Embodiment 8] The method according to any one of embodiments 1 to 7, wherein an amount of [4-(glycidyloxy)phenyl]diglycidylamine mixed in the epoxy resin composition is preferably more than or equal to 20% by weight, more preferably more than or equal to 25% by weight, and still more preferably more than or equal to 30% by weight, and can be more than or equal to 35% by weight or more than or equal to 40% by weight, with respect to all epoxy resin components mixed in the epoxy resin composition.
[Embodiment 9] The method according to any one of embodiments 1 to 8, wherein 4,4'-methylenebis(N,N-diglycidylaniline) is further mixed in the epoxy resin composition.
[Embodiment 10] The method according to any one of embodiments 1 to 9, wherein the curing agent component comprises a latent curing agent.
[Embodiment 11] The method according to embodiment 10, wherein the latent curing agent comprises one or more curing agents selected from a group consisting of dicyandiamide, imidazoles, and amine adducts.
[Embodiment 12] The method according to any one of embodiments 1 to 11, wherein a thickening agent component is mixed in the epoxy resin composition.
[Embodiment 13] The method according to any one of embodiments 1 to 12, wherein a carboxylic acid anhydride having a viscosity of less than 0.5 Pa·s at 25°C is mixed in the epoxy resin composition.
[Embodiment 14] The method according to any one of embodiments 1 to 13, wherein the prepreg is a sheet molding compound.
[Embodiment 15] An electrodeposition-coated article produced by the method according to any one of embodiments 1 to 14.
[Embodiment 16] A prepreg comprising: an epoxy resin composition in which a bisphenol type epoxy resin, [4-(glycidyloxy)phenyl]diglycidylamine, and a curing agent component are mixed; and a carbon fiber reinforcement, the epoxy resin composition, when cured at 140°C, giving a cured resin which has a glass transition temperature G'-Tg of more than 100°C and less than 200°C and in which a dynamic storage elastic modulus G' value at 200°C is preferably more than or equal to 8%, more preferably more than or equal to 10%, and still more preferably more than or equal to 12% of the value at 100°C.
[Embodiment 17] The prepreg according to embodiment 16, wherein 4,4'-methylenebis(N,N-diglycidylaniline) is further mixed in the epoxy resin composition.
[Embodiment 18] A prepreg comprising: an epoxy resin composition in which a bisphenol type epoxy resin, [4-(glycidyloxy)phenyl]diglycidylamine, 4,4'-methylenebis(N,N-diglycidylaniline) and a curing agent component are mixed; and a carbon fiber reinforcement.
[Embodiment 19] The prepreg according to any one of embodiments 16 to 18, wherein a total amount of the bisphenol type epoxy resin mixed in the epoxy resin composition is preferably more than or equal to 50% by weight with respect to all epoxy resin components mixed in the epoxy resin composition.
[Embodiment 20] The prepreg according to any one of embodiments 16 to 19, wherein the bisphenol type epoxy resin comprises a bisphenol A epoxy resin.
[Embodiment 21] The prepreg according to embodiment 20, wherein a total amount of the bisphenol A epoxy resin mixed in the epoxy resin composition is preferably more than or equal to 50% by weight with respect to all epoxy resin components mixed in the epoxy resin composition.
[Embodiment 22] The prepreg according to any one of embodiments 16 to 21, wherein a total amount of the bisphenol type epoxy resin mixed in the epoxy resin composition is preferably less than or equal to 80% by weight, and more preferably less than or equal to 75% by weight with respect to all epoxy resin components mixed in the epoxy resin composition.
[Embodiment 23] The prepreg according to any one of embodiments 16 to 22, wherein an amount of [4-(glycidyloxy)phenyl]diglycidylamine mixed in the epoxy resin composition is preferably more than or equal to 20% by weight, more preferably more than or equal to 25% by weight, and still more preferably more than or equal to 30% by weight, and can be more than or equal to 35% by weight or more than or equal to 40% by weight, with respect to all epoxy resin components mixed in the epoxy resin composition.
[Embodiment 24] The prepreg according to any one of embodiments 16 to 23, wherein the curing agent component comprises a latent curing agent.
[Embodiment 25] The prepreg according to [embodiment 24], wherein the latent curing agent comprises one or more curing agents selected from a group consisting of dicyandiamide, imidazoles, and amine adducts.
[Embodiment 26] The prepreg according to any one of embodiments 16 to 25, wherein a thickening agent component is mixed in the epoxy resin composition.
[Embodiment 27] The prepreg according to any one of embodiments 16 to 26, wherein a carboxylic acid anhydride having a viscosity of less than 0.5 Pa·s at 25°C is mixed in the epoxy resin composition.
[Embodiment 28] The prepreg according to any one of embodiments 16 to 27, which is a sheet molding compound.
[Embodiment 29] A method for producing a carbon fiber-reinforced plastic molded article, the method comprising curing the prepreg according to any one of embodiments 16 to 28.
[Embodiment 30] A carbon fiber-reinforced plastic molded article comprising a cured product of the prepreg according to any one of embodiments 16 to 29.
[Embodiment 31] A method for producing an electrodeposition-coated article, the method comprising coating, by electrodeposition, the carbon fiber-reinforced plastic molded article according to embodiment 30.
[Embodiment 32] An epoxy resin composition in which a bisphenol type epoxy resin, [4-(glycidyloxy)phenyl]diglycidylamine, and a curing agent component are mixed, the epoxy resin composition, when cured at 140°C, giving a cured resin which has a glass transition temperature G'-Tg of more than 100°C and less than 200°C and in which a dynamic storage elastic modulus G' value at 200°C is preferably more than or equal to 8%, more preferably more than or equal to 10%, and still more preferably more than or equal to 12% of the value at 100°C.
[Embodiment 33] The epoxy resin composition according to embodiment 32, in which 4,4'-methylenebis(N,N-diglycidylaniline) is further mixed.
[Embodiment 34] An epoxy resin composition in which a bisphenol type epoxy resin, [4-(glycidyloxy)phenyl]diglycidylamine, 4,4'-methylenebis(N,N-diglycidylaniline) and a curing agent component are mixed.
[Embodiment 35] The epoxy resin composition according to any one of embodiments 32 to 34, wherein a viscosity at 25°C of the epoxy resin composition is preferably less than or equal to 30 Pa·s, more preferably less than or equal to 15 Pa·s, still more preferably less than or equal to 10 Pa·s and can be less than or equal to 5 Pa·s.
[Embodiment 36] The epoxy resin composition according to embodiment 35, which is not a varnish.
[Embodiment 37] The epoxy resin composition according to any one of embodiments 32 to 36, wherein a total amount of the bisphenol type epoxy resin mixed is preferably more than or equal to 50% by weight with respect to all epoxy resin components mixed.
[Embodiment 38] The epoxy resin composition according to any one of embodiments 32 to 37, wherein the bisphenol type epoxy resin comprises a bisphenol A epoxy resin.
[Embodiment 39] The epoxy resin composition according to embodiment 38, wherein a total amount of the bisphenol A epoxy resin mixed is preferably more than or equal to 50% by weight with respect to all epoxy resin components mixed.
[Embodiment 40] The epoxy resin composition according to any one of embodiments 32 to 39, wherein a total amount of the bisphenol type epoxy resin mixed is preferably less than or equal to 80% by weight and more preferably less than or equal to 75% by weight with respect to all epoxy resin components mixed.
[Embodiment 41] The epoxy resin composition according to any one of embodiments 32 to 40, wherein an amount of [4-(glycidyloxy)phenyl]diglycidylamine mixed is preferably more than or equal to 20% by weight, more preferably more than or equal to 25% by weight, and still more preferably more than or equal to 30% by weight, and can be more than or equal to 35% by weight or more than or equal to 40% by weight, with respect to an amount of all epoxy resin components mixed.
[Embodiment 42] The epoxy resin composition according to any one of embodiments 32 to 41, wherein the curing agent component comprises a latent curing agent.
[Embodiment 43] The epoxy resin composition to embodiment 42, wherein the latent curing agent comprises one or more curing agents selected from a group consisting of dicyandiamide, imidazoles, and amine adducts.
[Embodiment 44] The epoxy resin composition according to any one of embodiments 32 to 43, in which a thickening agent component is mixed.
[Embodiment 45] The epoxy resin composition according to any one of embodiments 32 to 44, wherein a carboxylic acid anhydride having a viscosity of less than 0.5 Pa·s at 25°C is mixed.
[Embodiment 46] A method for producing a prepreg, the method comprising impregnating a carbon fiber reinforcement with the epoxy resin composition according to any one of embodiments 32 to 45.
[Embodiment 47] The method according to embodiment 46, wherein the epoxy resin composition is thickened after the impregnating.
[Embodiment 48] The method according to embodiment 47, wherein the prepreg is a sheet molding compound.

The present invention has been described by referring to concrete embodiments. Note that the concrete embodiments are provided merely as examples, and is not intended to limit the scope of the present invention. The embodiments described in the present specification each can be altered in various ways to the extent that an effect of the present invention can be yielded, and can be combined with a feature described in another embodiment to the extent practicable.

### Industrial Applicability

An electrodeposition-coated article production method according to an embodiment can be used in production of various electrodeposition-coated articles that are contained in automobiles, motorcycles, bicycles, ships, railway vehicles, manned aircrafts, unmanned aircrafts, and other equipment for transportation, and sport articles, leisure articles, home electric appliances, farm machines, and building materials.

A prepreg according to an embodiment can be used in production of various carbon fiber-reinforced plastic parts that are contained in automobiles, motorcycles, bicycles, ships, railway vehicles, manned aircrafts, unmanned aircrafts, and other equipment for transportation, and sport articles, leisure articles, home electric appliances, farm machines, and building materials.

### Reference Signs List

1 rotary cutter
2a first coater
2b second coater
3 impregnating machine
10 continuous fiber bundle
20 chopped fiber bundle
30 fiber mat
41 first resin paste
41L first resin paste layer
42 second resin paste
42 second resin paste layer
51 first carrier film
52 second carrier film
60 stack

## Claims

1. A method for producing an electrodeposition-coated article, the method comprising:
a molding step of obtaining a carbon fiber-reinforced plastic molded article by curing a prepreg comprising a carbon fiber reinforcement and an epoxy resin composition in which a bisphenol type epoxy resin, [4-(glycidyloxy)phenyl]diglycidylamine and a curing agent component are mixed; and
an electrodeposition coating step of coating the carbon fiber-reinforced plastic molded article by electrodeposition.

2. The method according to claim 1, wherein in the molding step, the prepreg is cured at a temperature of lower than or equal to 180°C.

3. The method according to claim 1 or 2, wherein the epoxy resin composition, when cured at 140°C, gives a cured resin which has a glass transition temperature G'-Tg of more than 100°C and less than 200°C and in which a dynamic storage elastic modulus G' value at 200°C is more than or equal to 8% of the value at 100°C.

4. The method according to any one of claims 1 to 3, wherein a total amount of the bisphenol type epoxy resin mixed in the epoxy resin composition is more than or equal to 50% by weight with respect to all epoxy resin components mixed in the epoxy resin composition.

5. The method according to any one of claims 1 to 4, wherein the bisphenol type epoxy resin comprises a bisphenol A epoxy resin.

6. The method according to claim 5, wherein a total amount of the bisphenol A epoxy resin mixed in the epoxy resin composition is more than or equal to 50% by weight with respect to all epoxy resin components mixed in the epoxy resin composition.

7. The method according to any one of claims 1 to 6, wherein a total amount of the bisphenol type epoxy resin mixed in the epoxy resin composition is less than or equal to 80% by weight with respect to all epoxy resin components mixed in the epoxy resin composition.

8. The method according to any one of claims 1 to 7, wherein an amount of [4-(glycidyloxy)phenyl]diglycidylamine mixed in the epoxy resin composition is more than or equal to 20% by weight with respect to all epoxy resin components mixed in the epoxy resin composition.

9. The method according to any one of claims 1 to 8, wherein 4,4'-methylenebis(N,N-diglycidylaniline) is further mixed in the epoxy resin composition.

10. The method according to any one of claims 1 to 9, wherein the curing agent component comprises a latent curing agent.

11. The method according to claim 10, wherein the latent curing agent comprises one or more curing agents selected from a group consisting of dicyandiamide, imidazoles, and amine adducts.

12. The method according to any one of claims 1 to 11, wherein a thickening agent component is mixed in the epoxy resin composition.

13. The method according to any one of claims 1 to 12, wherein a carboxylic acid anhydride having a viscosity of less than 0.5 Pa·s at 25°C is mixed in the epoxy resin composition.

14. The method according to any one of claims 1 to 13, wherein the prepreg is a sheet molding compound.

15. An electrodeposition-coated article produced by the method according to any one of claims 1 to 14.

16. A prepreg comprising:
an epoxy resin composition in which a bisphenol type epoxy resin, [4-(glycidyloxy)phenyl]diglycidylamine, and a curing agent component are mixed; and
a carbon fiber reinforcement,
the epoxy resin composition, when cured at 140°C, giving a cured resin which has a glass transition temperature G'-Tg of more than 100°C and less than 200°C and in which a dynamic storage elastic modulus G' value at 200°C is more than or equal to 8% of the value at 100°C.

17. The prepreg according to claim 16, wherein 4,4'-methylenebis(N,N-diglycidylaniline) is further mixed in the epoxy resin composition.

18. A prepreg comprising:
an epoxy resin composition in which a bisphenol type epoxy resin, [4-(glycidyloxy)phenyl]diglycidylamine, 4,4'-methylenebis(N,N-diglycidylaniline) and a curing agent component are mixed; and
a carbon fiber reinforcement.

19. The prepreg according to any one of claims 16 to 18, wherein a total amount of the bisphenol type epoxy resin mixed in the epoxy resin composition is more than or equal to 50% by weight with respect to all epoxy resin components mixed in the epoxy resin composition.

20. The prepreg according to any one of claims 16 to 19, wherein the bisphenol type epoxy resin comprises a bisphenol A epoxy resin.

21. The prepreg according to claim 20, wherein a total amount of the bisphenol A epoxy resin mixed in the epoxy resin composition is more than or equal to 50% by weight with respect to all epoxy resin components mixed in the epoxy resin composition.

22. The prepreg according to any one of claims 16 to 21, wherein a total amount of the bisphenol type epoxy resin mixed in the epoxy resin composition is less than or equal to 80% by weight with respect to all epoxy resin components mixed in the epoxy resin composition.

23. The prepreg according to any one of claims 16 to 22, wherein an amount of [4-(glycidyloxy)phenyl]diglycidylamine mixed in the epoxy resin composition is more than or equal to 20% by weight with respect to all epoxy resin components mixed in the epoxy resin composition.

24. The prepreg according to any one of claims 16 to 23, wherein the curing agent component comprises a latent curing agent.

25. The prepreg according to claim 24, wherein the latent curing agent comprises one or more curing agents selected from a group consisting of dicyandiamide, imidazoles, and amine adducts.

26. The prepreg according to any one of claims 16 to 25, wherein a thickening agent component is mixed in the epoxy resin composition.

27. The prepreg according to any one of claims 16 to 26, wherein a carboxylic acid anhydride having a viscosity of less than 0.5 Pa·s at 25°C is mixed in the epoxy resin composition.

28. The prepreg according to any one of claims 16 to 27, which is a sheet molding compound.

29. A method for producing a carbon fiber-reinforced plastic molded article, the method comprising curing the prepreg according to any one of claims 16 to 28.

30. A carbon fiber-reinforced plastic molded article comprising a cured product of the prepreg according to any one of claims 16 to 29.

31. A method for producing an electrodeposition-coated article, the method comprising coating, by electrodeposition, the carbon fiber-reinforced plastic molded article according to claim 30.

32. An epoxy resin composition in which a bisphenol type epoxy resin, [4-(glycidyloxy)phenyl]diglycidylamine, and a curing agent component are mixed,
the epoxy resin composition, when cured at 140°C, giving a cured resin which has a glass transition temperature G'-Tg of more than 100°C and less than 200°C and in which a dynamic storage elastic modulus G' value at 200°C is more than or equal to 8% of the value at 100°C.

33. The epoxy resin composition according to claim 32, in which 4,4'-methylenebis(N,N-diglycidylaniline) is further mixed.

34. An epoxy resin composition in which a bisphenol type epoxy resin, [4-(glycidyloxy)phenyl]diglycidylamine, 4,4'-methylenebis(N,N-diglycidylaniline) and a curing agent component are mixed.

35. The epoxy resin composition according to any one of claims 32 to 34, having a viscosity at 25°C of less than or equal to 30 Pa·s.

36. The epoxy resin composition according to claim 35, which is not a varnish.

37. The epoxy resin composition according to any one of claims 32 to 36, wherein a total amount of the bisphenol type epoxy resin mixed is more than or equal to 50% by weight with respect to all epoxy resin components mixed.

38. The epoxy resin composition according to any one of claims 32 to 37, wherein the bisphenol type epoxy resin comprises a bisphenol A epoxy resin.

39. The epoxy resin composition according to claim 38, wherein a total amount of the bisphenol A epoxy resin mixed is more than or equal to 50% by weight with respect to all epoxy resin components mixed.

40. The epoxy resin composition according to any one of claims 32 to 39, wherein a total amount of the bisphenol type epoxy resin mixed is less than or equal to 80% by weight with respect to all epoxy resin components mixed.

41. The epoxy resin composition according to any one of claims 32 to 40, wherein an amount of [4-(glycidyloxy)phenyl]diglycidylamine mixed is more than or equal to 20% by weight with respect to an amount of all epoxy resin components mixed.

42. The epoxy resin composition according to any one of claims 32 to 41, wherein the curing agent component comprises a latent curing agent.

43. The epoxy resin composition to claim 42, wherein the latent curing agent comprises one or more curing agents selected from a group consisting of dicyandiamide, imidazoles, and amine adducts.

44. The epoxy resin composition according to any one of claims 32 to 43, in which a thickening agent component is mixed.

45. The epoxy resin composition according to any one of claims 32 to 44, wherein a carboxylic acid anhydride having a viscosity of less than 0.5 Pa·s at 25°C is mixed.

46. A method for producing a prepreg, the method comprising impregnating a carbon fiber reinforcement with the epoxy resin composition according to any one of claims 32 to 45.

47. The method according to claim 46, wherein the epoxy resin composition is thickened after the impregnating.

48. The method according to claim 47, wherein the prepreg is a sheet molding compound.
